# EUROPEAN PATENT SPECIFICATION

(11) **EP 4 418 427 B1**
(45) Date of publication and mention of the grant of the patent: **07.10.2026**
(21) Application number: 23762811.0
(22) Date of filing: 23.02.2023
(51) Int. Cl.: H01M 50/271, H01M 50/24, H01M 50/249, H01M 50/204, H01M 50/209

(54) **BATTERY BOX BODY, BATTERY AND ELECTRICAL DEVICE**
BATTERIEKASTENKÖRPER, BATTERIE UND ELEKTRISCHE VORRICHTUNG
CORPS DE COMPARTIMENT DE BATTERIE, BATTERIE ET DISPOSITIF ÉLECTRIQUE

(30) Priority: 03.03.2022 CN 202220450229 U
(43) Date of publication of application: 21.08.2024
(73) Proprietor: Contemporary Amperex Technology (Hong Kong) Limited, Central, Central And Western District (HK)
(72) Inventor: MIAO, Huimin, Ningde, Fujian 352100 (CN); PAN, Xin, Ningde, Fujian 352100 (CN); CHEN, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2023/077952
(87) International publication number: WO 2023/165411

(56) References cited:
- CN-B- 108 206 254
- CN-U- 207 558 869
- CN-U- 210 429 890
- CN-U- 211 320 162
- CN-U- 214 505 702
- CN-U- 215 816 240
- CN-U- 216 389 630
- DE-A1- 102017 204 530
- US-A1- 2012 164 500
- US-A1- 2019 097 187
- US-B2- 11 211 655
- US-B2- 9 412 983

## Description

### CROSS-REFERENCE TO RELATED APPLICATIONS

This application claims priority to Chinese Patent Application No. 202220450229.5, filed on March 03, 2022 and entitled "BATTERY BOX, BATTERY, AND ELECTRIC DEVICE".

### TECHNICAL FIELD

This application relates to the field of batteries and specifically to a battery box, a battery, and an electric device.

### BACKGROUND

With the development and progress of the society, as a new energy source, traction batteries have quickly entered the public vision and are widely used in various fields.

A battery typically includes a box and a battery cell accommodated in the box, and the box includes an upper cover and a lower box body. However, in the prior art, such as in documents US2019/097187A1 or CN108206254B, battery assembly features low overall efficiency and cannot be automated, affecting the battery yield and making it difficult to meet the demand for batteries in the modern society.

### SUMMARY

In view of the foregoing problems, this application provides a battery box, so as to effectively resolve the following problem in the prior art: the battery assembly features low overall efficiency and cannot be automated, affecting the battery yield and making it difficult to meet the demand for batteries in the modern society.

According to a first aspect, this application provides a battery box according to claim 1, including an upper cover. The upper cover includes an upper cover body and a pressing strip. A circumferential edge of the upper cover body is provided with a flange, the flange has a first surface, and the first surface is a surface of the flange facing away from a lower box body of the battery box. The pressing strip is in attachment connection with the first surface of the flange.

In technical solutions of embodiments of this application, the pressing strip is in attachment connection with the flange of the upper cover body to form the upper, such that the pressing strip can not only reinforce the flange of the upper cover body and prevent deformation thereof, but also allow the upper cover to be integrated for provision, eliminating the procedure of assembling the upper cover body and the pressing strip in the factory. This effectively improves the overall assembly efficiency of the battery box and the battery, facilitating automatic assembly. In addition, as the pressing strip is disposed on the first surface of the flange facing away from the lower box body in the battery box, when the upper cover is assembled with the lower box body, sealing can be guaranteed with only one layer of sealing gasket disposed between the flange and the lower box body. This avoids the need for disposing a sealing gasket between the flange and the lower box body and also a sealing gasket between the flange and the pressing strip when the pressing strip is disposed on a side surface of the flange facing the lower box body, thus effectively improving efficiency, simplifying structure, and also reducing costs to some extent. Moreover, different from cumbersome and time-consuming connection manners such as bolting, locking, and snap-fitting, the attachment connection is significantly conducive to improving the assembly efficiency between the upper cover body and the pressing strip and simplifying the assembly procedure.

In some embodiments, the first surface of the flange is provided with several connecting portions spaced apart from each other, the connecting portion runs through the pressing strip along a direction leaving the first surface, and the connecting portion can cover at least part of a surface of the pressing strip facing away from the first surface and connect the pressing strip and the flange. The provision of the connecting portion can allow for not only positioning of the pressing strip but also covering and connection for the pressing strip through state change of the connecting portion. This effectively improves the assembly efficiency while simplifying operation.

In some embodiments, the connecting portion is a hot melt post. The connecting portion being arranged as a hot melt post can implement state change of the connecting portion. When the pressing strip is not connected, the connecting portion simply runs through the pressing strip for positioning of the pressing strip. When the pressing strip needs to be in attachment connection with the flange, an end of the connecting portion away from the flange is heated using a hot riveting means to melt on the pressing strip, so as to implement covering and attachment connection for the pressing strip.

In some embodiments, an end of the connecting portion away from the flange exceeds the surface of the pressing strip facing away from the first surface. As the end of the connecting portion away from the flange is arranged as exceeding the surface of the pressing strip facing away from the first surface, it can be ensured that after hot melting, the connecting portion melts on the surface of the pressing strip facing away from the first surface, such that the surface is partially covered and connection with the unmelted portion of the connecting portion is maintained, thus effectively achieving attachment connection between the pressing strip and the flange.

According to claim 1, the flange is provided with several first through holes spaced apart from each other, and the first through hole runs through the flange along a thickness direction of the flange; and the pressing strip is provided with several second through holes spaced apart from each other, and the second through hole and the first through hole are arranged coaxially and used for fitting with a bolt for connection with the lower box body. The provision of the first through holes in the flange and the second through holes in the pressing strip allows for cooperative communication, ensuring high efficiency of bolting connection with the lower box body, avoiding waste of time and labor caused by repeated drilling or secondary drilling.

According to claim 1, the pressing strip is provided with several third through holes corresponding to the several connecting portions, and the third through hole is used for sleeving the connecting portion; and a distance between the third through hole and an outer edge of the flange is less than a distance between the second through hole and the outer edge of the flange. With the provision of the third through holes in the pressing strip, sleeve fitting between the pressing strip and connecting portion can be achieved, effectively improving the accuracy and efficiency of positioning the pressing strip by the connecting portion. In addition, a bolted joint between the flange of the upper cover and the lower box body generally extends inward to form an efficient sealing region, such that the distance between the third through hole and the outer edge of the flange is less than the distance between the second through hole and the outer edge of the flange in this embodiment, thus avoiding sealing failure of the battery box when the third through hole fits with the bolt.

In some embodiments, the upper cover body and the connecting portion are integrally formed. The upper cover body and the connecting portion are prepared through an integral forming process, which features convenient processing, high efficiency, and low costs of components, greatly improving the overall assembly efficiency.

In some embodiments, the pressing strip is in attachment connection with the first surface of the flange through friction welding. The friction welding process can also implement attachment connection between the pressing strip and the flange without an external connection structure, simplifying the connection process and improving the connection efficiency.

In some embodiments, the pressing strip is provided with a reinforcing portion. The reinforcing portion is disposed at any edge extending along a length direction of the pressing strip, the reinforcing portion extends along a thickness direction of the pressing strip, and the reinforcing portion is in transition connection with the edge of the pressing strip via a rounded corner. The provision of the reinforcing portion can effectively enhance the strength of the pressing strip, conducive to avoiding deformation of the flange. In addition, the reinforcing portion being in transition connection with the edge of the pressing strip via the rounded corner can not only allow for effective transition and force transfer but also fit with a transition position between the flange on the upper cover body and the upper cover body, preventing abrasion on the flange or the upper cover body caused by direct abutting of the pressing strip against the position.

According to a second aspect, this application provides a battery including the foregoing battery box.

According to a third aspect, this application provides an electric device including the foregoing battery.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments. In addition, in all the accompanying drawings, same parts are denoted by same reference signs.

In the accompanying drawings:
FIG. 1 is a schematic structural diagram of an electric device according to some embodiments of this application;
FIG. 2 is a schematic exploded structural view of a battery according to some embodiments of this application;
FIG. 3 is a schematic exploded structural view of a battery cell according to some embodiments of this application;
FIG. 4 is a schematic structural diagram of an upper cover in a battery box according to some embodiments of this application;
FIG. 5 is a schematic exploded structural view of an upper cover in a battery box according to some embodiments of this application;
FIG. 6 is a schematic diagram of a partial structure of an upper cover in a battery box according to some embodiments of this application; and
FIG. 7 is a schematic structural diagram of an upper cover body of an upper cover in a battery box fitting with a pressing strip according to some embodiments of this application.

Reference signs in specific embodiments are as follows:
battery box 1; upper cover 2; upper cover body 3; flange 31; connecting portion 32; first through hole 33; second through hole 34; side wall 35; pressing strip 4; third through hole 41; reinforcing portion 42; lower box body 5; battery cell 6; end cover 61; housing 62; electrode assembly 63; electrode terminal 64; tab 65; vehicle 1000; battery 100; controller 200; and motor 300.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The applicant has noticed that a battery typically includes a box and a battery cell accommodated in the box, and the box includes an upper cover and a box body. A flange of the upper cover is bolted to the box body for sealing to form an accommodating space for the battery cell. In addition, to avoid deformation of the flange which otherwise affects the sealing between the upper cover and the box body, a pressing strip with certain strength is typically fixed to the flange via a bolt. A typical process is that in a process of packaging and sealing of the battery, the upper cover and the pressing strip, separately provided, need to be connected via a bolt for pre-assembly before the procedure of boxing and sealing the battery can be performed. In this process, separate provision of the upper cover and the pressing strip, pre-assembly, and cumbersome locking with the bolt significantly reduce the efficiency of the overall assembly of the battery and cannot ensure fully automatic and efficient assembly of the battery.

To resolve the following problem in the prior art: the battery assembly features low overall efficiency and cannot be automated, affecting the battery yield and making it difficult to satisfy the demand for the battery in the modern society, the applicant has found through research that an upper cover 2 can be arranged as an integral structure including an upper cover body 3 and a pressing strip 4. The upper cover body 3 and the pressing strip 4 are pre-connected at an upstream manufacturer to form an integral structure and then provided, such that the integrated upper cover 2 can be directly connected to and sealed with a lower box body 5 after entering the factory, thus greatly improving the assembly efficiency of a battery box 1.

Based on the foregoing consideration, to resolve the problem in the prior art that the low assembly efficiency of the upper cover and the pressing strip affects the overall assembly efficiency of the battery and causes a failure of automation, the applicant has designed, through deep research, a battery box 1 including an upper cover 2. The upper cover 2 is an integrated upper cover 2 formed after a pressing strip 4 is in attachment connection with a flange 31 of an upper cover body 3.

In such battery box 1, the upper cover 2 includes the upper cover body 3 and the pressing strip 4. A circumferential edge of the upper cover body 3 is provided with a flange 31, the flange 31 has a first surface, and the first surface is a surface of the flange 31 facing away from a lower box body 5 of the battery box 1. The pressing strip 4 is in attachment connection with the first surface of the flange 31. The pressing strip 4 can not only reinforce the flange 31 of the upper cover body 3 and prevent deformation thereof, but also allow the upper cover 2 to be integrated for provision, eliminating the procedure of assembling the upper cover body 3 and the pressing strip 4 in the factory. This effectively improves the overall assembly efficiency of the battery box 1 and the battery 100, facilitating automatic assembly. Moreover, different from cumbersome and time-consuming connection manners such as bolting, locking, and snap-fitting, the attachment connection is significantly conducive to improving the assembly efficiency between the upper cover body and the pressing strip and simplifying the assembly procedure.

The battery box 1 disclosed in the embodiments of this application may be used without limitation in lithium batteries. An electric device using a battery and the like formed by the battery box 1 disclosed in this application and a power system formed using the electric device can be used. This is conducive to resolving the problem in the prior art that the low assembly efficiency of the upper cover and the pressing strip affects the overall assembly efficiency of the battery and causes a failure of automation.

The embodiments of this application provide an electric device that uses a battery as a power source. The electric device may be used in but is not limited to fields such as construction, military, travel, defense, and power supply. For example, the electric device may be a mobile phone, a tablet, a laptop computer, an electric toy, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

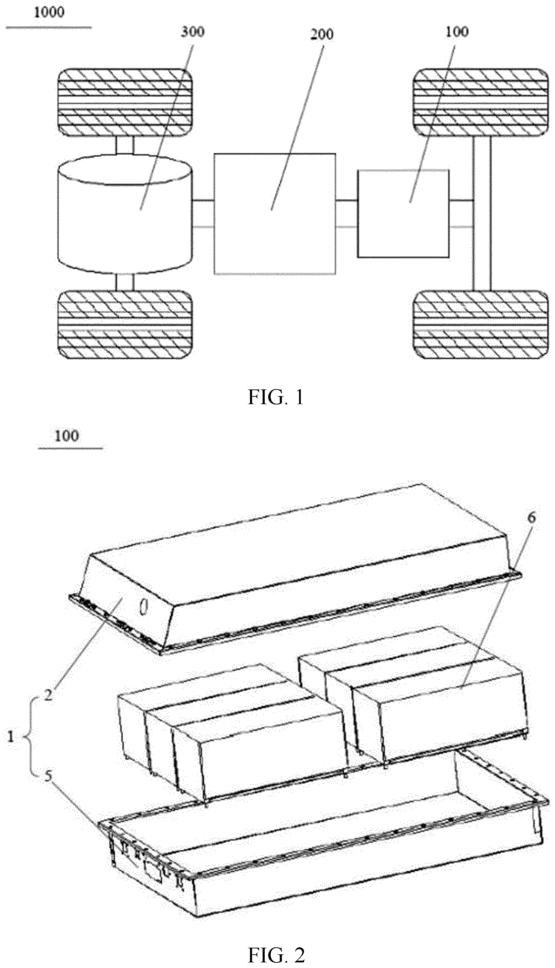

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a battery box 1 and a battery cell 6, where the battery cell 6 is accommodated in the battery box 1. The battery box 1 is configured to provide an accommodating space for the battery cell 6, and the battery box 1 may be a variety of structures. In some embodiments, the battery box 1 may include an upper cover 2 and a lower box body 5. The upper cover 2 and the lower box body 5 fit together so that the upper cover 2 and the lower box body 5 jointly define a space for accommodating the battery cell 6. The lower box body 5 may be a hollow structure with one end open, and the upper cover 2 may be of a plate structure, where the upper cover 2 covers the open side of the lower box body 5 for the upper cover 2 and the lower box body 5 to jointly define an accommodating space. Alternatively, the upper cover 2 and the lower box body 5 may both be hollow structures with one side open, where the open side of the upper cover 2 is engaged with the open side of the lower box body 5. Certainly, the battery box 1 formed by the upper cover 2 and the lower box body 5 may be a variety of shapes, for example, cylinder or cuboid.

In the battery 100, the battery cell 6 may be present in plurality, and the plurality of battery cells 6 may be connected in series, parallel, or series-parallel, where being connected in series-parallel means a combination of series and parallel connections of the plurality of battery cells 6. The plurality of battery cells 6 may be directly connected in series, parallel or series-parallel, and then an entirety of the plurality of battery cells 6 is accommodated in the battery box 1. Certainly, the plurality of battery cells 6 may alternatively be connected in series, parallel or series-parallel first to form a battery module and then a plurality of such battery modules are connected in series, parallel or series-parallel to form an entirety which is accommodated in the battery box 1 to form the battery 100. The battery 100 may further include other structures. For example, the battery 100 may further include a busbar configured to implement electrical connection between the plurality of battery cells 6.

Each battery cell 6 may be a secondary battery or a primary battery, and may be a lithium-sulfur battery, a sodium-ion battery, or a magnesium-ion battery, without being limited thereto. The battery cell 6 may be cylindrical, flat, cuboid, or in other shapes.

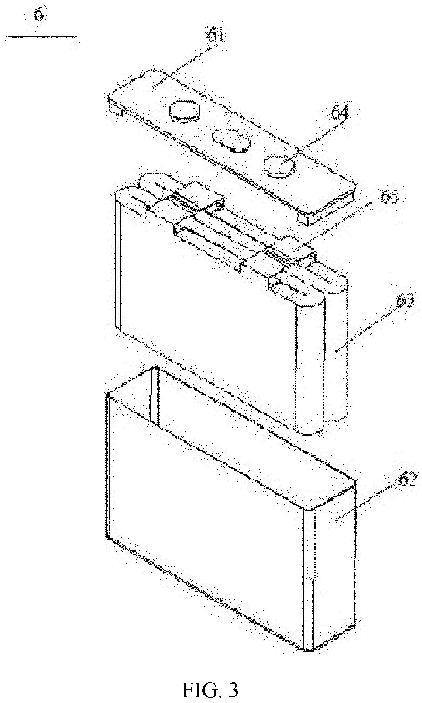

Referring to FIG. 3, FIG. 3 is a schematic exploded structural view of a battery cell 6 according to some embodiments of this application. The battery cell 6 refers to a smallest unit constituting a battery. As shown in FIG. 3, the battery cell 6 includes an end cover 61, a housing 62, an electrode assembly 63, and other functional components.

The end cover 61 refers to a component that covers an opening of the housing 62 to isolate an internal environment of the battery cell 6 from an external environment. A shape of the end cover 61 is not limited and may be adapted to a shape of the housing 62 to fit the housing 62. Optionally, the end cover 61 may be made of a material with specified hardness and strength (for example, aluminum alloy), so that the end cover 61 is less likely to deform when subjected to extrusion and collision, allowing the battery cell 6 to have higher structural strength and enhanced safety performance. The end cover 61 may be provided with functional components such as an electrode terminal 64. The electrode terminal 64 may be configured to be electrically connected to the electrode assembly 63 for outputting or inputting electrical energy of the battery cell 6. In some embodiments, the end cover 61 may further be provided with a pressure relief mechanism for releasing internal pressure when the internal pressure or a temperature of the battery cell 6 reaches a threshold. The end cover 61 may also be made of various materials, such as copper, iron, aluminum, stainless steel, aluminum alloy, and plastic, which are not particularly limited in the embodiments of this application. In some embodiments, an insulator may also be provided on an inner side of the end cover 61. The insulator may be configured to isolate an electrically connected component in the housing 62 from the end cover 61 to reduce a risk of short circuit. For example, the insulator may be made of plastic, rubber, or the like.

The housing 62 is an assembly configured to form an internal environment of the battery cell 6 together with the end cover 61, where the formed internal environment may be used for accommodating the electrode assembly 63, an electrolyte, and other components. The housing 62 and the end cover 61 may be separate components, an opening may be provided on the housing 62, and the end cover 61 covers the opening to form the internal environment of the battery cell 6. The end cover 61 and the housing 62 are not limited and may also be integrated. Specifically, the end cover 61 and the housing 62 may form a shared connection surface before other components are disposed inside the housing, and then the housing 62 is covered with the end cover 61 when inside of the housing 62 needs to be enclosed. The housing 62 may be in various shapes and sizes, such as a cuboid shape, a cylindrical shape, and a hexagonal prism shape. Specifically, a shape of the housing 62 may be determined according to a specific shape and size of the electrode assembly 63. The housing 62 may be made of various materials, such as copper, iron, aluminum, stainless steel, aluminum alloy, and plastic, which are not particularly limited in the embodiments of this application.

The electrode assembly 63, as a component in which electrochemical reactions occur in the battery cell 6, is also called a battery cell assembly or a battery cell. The housing 62 may include one or more electrode assemblies 63. The electrode assembly 63 is mainly formed by winding or stacking a positive electrode plate and a negative electrode plate, and a separator is generally disposed between the positive electrode plate and the negative electrode plate. Parts of the positive electrode plate and the negative electrode plate with an active substance constitute a body portion of the cell assembly, while parts of the positive electrode plate and the negative electrode plate without the active substance typically each constitute a tab 65. A positive tab and a negative tab may both be located at one end of the body portion or be located at two ends of the body portion respectively. During charge and discharge of the battery 100, a positive electrode active substance and a negative electrode active substance react with an electrolyte, and the tabs 65 are connected to electrode terminals 64 to form a current loop.

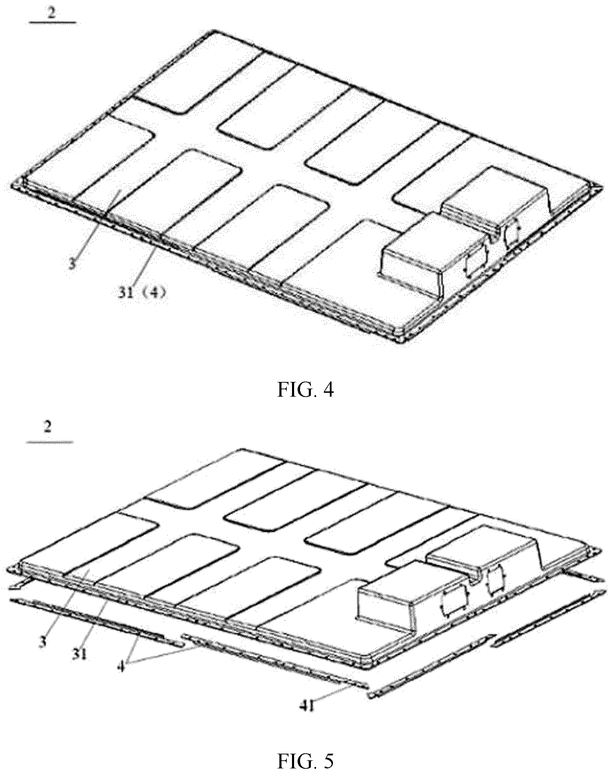

According to some embodiments of this application, referring to FIGs. 4 and 5, this application provides a battery box 1 including an upper cover 2. The upper cover 2 includes an upper cover body 3 and a pressing strip 4. A circumferential edge of the upper cover body 3 is provided with a flange 31, the flange 31 has a first surface, and the first surface is a surface of the flange 31 facing away from a lower box body 5 of the battery box 1. The pressing strip 4 is in attachment connection with the first surface of the flange 31.

The upper cover body 3 is a rigid structure and engaged with the lower box body 5 to jointly define a space for accommodating the battery cell 6. The lower box body 5 is typically a hollow structure with one end open, and then the upper cover body 3 may be a plate structure or a hollow structure with one side open. The circumferential edge of the upper cover body 3 is provided with the flange 31 to fit with a flange on an opening side of the lower box body 5 for connection and covering. Certainly, the upper cover body 3 may be in various shapes, for example, but not limited to, a cylinder and a cuboid. There is no more constraint on the preparation material of the upper cover body 3 herein, and may be but is not limited to plastics.

The flange 31 is a flat structure and can provide an attachment surface and connection position for connection between the upper cover 2 and the lower box body 5. In addition, the flange 31 extends outward along a horizontal direction from the edge of the upper cover body 3 to form a plane fitting with the lower box body 5 and a connection end. The flange on the opening side of the lower box body 5 is also arranged in such manner, thus ensuring tight connection on the premise of not compressing the accommodating space in the battery box 1.

The pressing strip 4 is of a rigid structure with certain strength, which is in attachment connection with the flange 31 to limit the flange 31, avoiding deformation of the flange 31. The material of the pressing strip 4 may be but is not limited to metal or high-strength plastics as long as strength is enough for ensuring that the flange 31 does not deform.

The pressing strip 4 is in attachment connection with the flange 31 of the upper cover body 3 to form the upper cover 2, such that the pressing strip 4 can not only reinforce the flange 31 of the upper cover body 3 and prevent deformation thereof, but also allow the upper cover 2 to be integrated for provision, eliminating the procedure of assembling the upper cover body 3 and the pressing strip 4 in the factory. This effectively improves the overall assembly efficiency of the battery box 1 and the battery 100, facilitating automatic assembly. In addition, as the pressing strip 4 is disposed on the first surface of the flange 31 facing away from the lower box body 5 in the battery box 1, when the upper cover 2 is assembled with the lower box body 5, sealing can be guaranteed with only one layer of sealing gasket (not shown in the figure) disposed between the flange 31 and the lower box body 5. This avoids the need for disposing a sealing gasket between the flange 31 and the lower box body 5 and also a sealing gasket between the flange 31 and the pressing strip 4 when the pressing strip 4 is disposed on a side surface of the flange 31 facing the lower box body 5, thus effectively improving efficiency, simplifying structure, and also reducing costs to some extent. Moreover, different from cumbersome and time-consuming connection manners such as bolting, locking, and snap-fitting, the attachment connection is significantly conducive to improving the assembly efficiency between the upper cover body 3 and the pressing strip 4 and simplifying the assembly procedure.

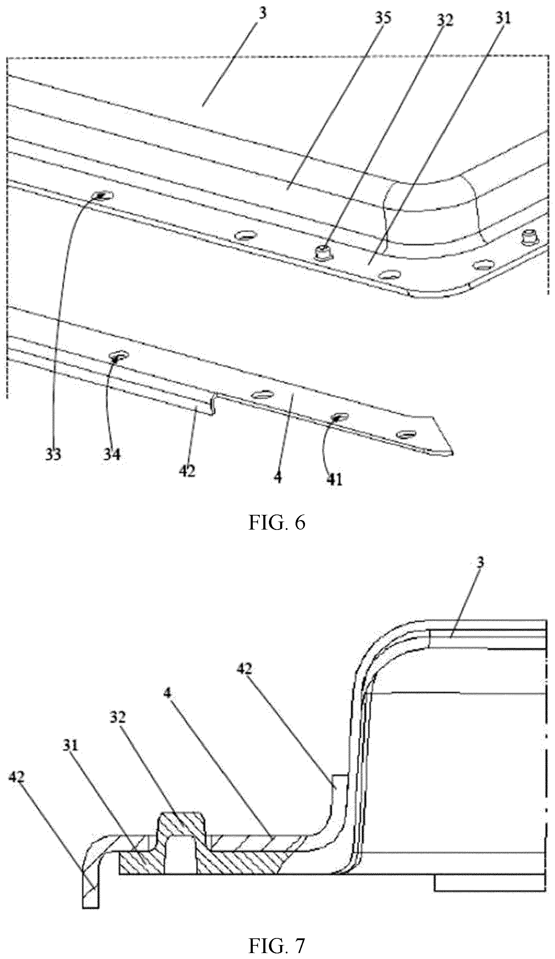

According to some embodiments of this application, optionally, referring to FIG. 6, the first surface of the flange 31 is provided with several connecting portions 32 spaced apart from each other, the connecting portion 32 runs through the pressing strip 4 along a direction leaving the first surface, and the connecting portion 32 can cover at least part of a surface of the pressing strip 4 facing away from the first surface and connect the pressing strip 4 and the flange 31.

The connecting portion 32 is a structure having a connecting or binding function, is disposed on the first surface of the flange 31 in a thickness direction thereof, that is, vertically, and can run through the pressing strip 4 and cover the pressing strip 4, thus implementing attachment connection between the flange 31 and the pressing strip 4. The shape of the connecting portion 32 may be but is not limited to a pillar or a block in shape, as long as the connecting portion 32 exceeds the first surface of the flange 31 and can run through the pressing strip 4.

As the first surface of the flange 31 is provided with several connecting portions 32 spaced apart from each other, the connecting portion 32 can not only position the pressing strip 4 in the process of running through the pressing strip 4, ensuring stable attachment connection between the pressing strip 4 and the flange 31, but also implement covering and connection for the pressing strip 4 through state change of the connecting portion 32, simplifying operation and effectively improving assembly efficiency.

According to some embodiments of this application, optionally, the connecting portion 32 is a hot melt post.

The hot melt post is a post that can be subjected to hot melting. The post body can be softened through heating and, under a force applied, deform to be in a desired shape, for example, but not limited to, a mushroom head shape, and remains unchanged in shape after cooling, providing certain fixing function.

In this embodiment, the connecting portion 32 is arranged as the hot melt post and made to run through the pressing strip 4, and a first end away from the first surface is subjected to hot melting to change the state of the connecting portion 32. Certainly, it can be understood that a melting point of the connecting portion 32 needs to be lower than a melting point of the pressing strip 4. For example, the connecting portion 32 may be made of PP with a melting point of 160°C, and the pressing strip 4 may be made of high-temperature nylon with a melting point of 260°C. When the connecting portion 32 is subjected to hot melting, it is unnecessary to worry about melting of the pressing strip 4; and when the pressing strip 4 is not connected, the connecting portion 32 simply runs through the pressing strip 4 for positioning. When the pressing strip 4 needs to be in attachment connection with the flange 31, a hot riveting means heats an end of the connecting portion 32 away from the flange 31, enabling it to melt onto the pressing strip 4 and to fix and adhere to the pressing strip 4.

According to some embodiments of this application, optionally, referring to FIG. 7, an end of the connecting portion 32 away from the flange 31 exceeds a surface of the pressing strip 4 facing away from the first surface.

As the end of the connecting portion 32 away from the flange 31 is arranged as exceeding a surface of the pressing strip 4 facing away from the first surface, it can be ensured that after hot melting, the connecting portion 32 can melt on the surface of the pressing strip 4 facing away from the first surface, such that the surface is partially covered and connection with the unmelted portion of the connecting portion 32 is maintained, effectively achieving attachment connection between the pressing strip 4 and the flange 31. There is no more constraint on a height of the connecting portion 32 in the direction facing away from the flange 31 herein, and the height can be set and adjusted based on the actual situations with reference to the pressing strip 4, for example, being 3 mm to 5 mm.

According to the invention, and referring to FIG. 6, the flange 31 is provided with several first through holes 33 spaced apart from each other, and the first through hole 33 runs through the flange 31 along a thickness direction of the flange 31; and the pressing strip 4 is provided with several second through holes 34 spaced apart from each other, and the second through hole 34 and the first through hole 33 are arranged coaxially and used for fitting with a bolt (not shown in the figure) for connection with the lower box body 5.

When the upper cover 2 and the lower box body 5 fit with each other and are sealed, a bolt is used to lock tightly the flange 31 of the upper cover 2 and a flange (not shown in the figure) of the lower box body 5, such that in this embodiment, the first through holes 33 and the second through holes 34 are correspondingly provided in the flange 31 and the pressing strip 4 to reserve connection positions for the subsequent covering operation. Certainly, a surface of the flange 31 facing away from the first surface is further provided with a sealing gasket (not shown in the figure) to ensure the sealing performance between the flange 31 of the upper cover 2 and the flange (not shown in the figure) of the lower box body 5.

The provision of the first through hole 33 in the flange 31 and the second through hole 34 in the pressing strip 4 allows for cooperative communication, ensuring high efficiency of bolting connection with the lower box body 5, avoiding waste of time and labor caused by repeated drilling or secondary drilling.

According to the invention, and referring to FIG. 6, the pressing strip 4 is provided with several third through holes 41 corresponding to the several connecting portions 32, and the third through hole 41 is used for sleeving the connecting portion 32; and a distance between the third through hole 41 and an outer edge of the flange 31 is less than a distance between the second through hole 34 and the outer edge of the flange 31.

With the provision of the third through holes 41 in the pressing strip 4, sleeve fitting between the pressing strip 4 and connecting portion 32 can be achieved, effectively improving the accuracy and efficiency of positioning the pressing strip 4 by the connecting portion 32. In addition, a bolted joint between the flange 31 of the upper cover 2 and the lower box body 5 generally extends inward to form an efficient sealing region, that is, a region covered by the sealing gasket (not shown in the figure), such that the distance between the third through hole 41 and the outer edge of the flange 31 is less than the distance between the second through hole 34 and the outer edge of the flange 31. This avoids sealing failure of the battery box 1 when the third through hole 41 fits with the bolt, and even a loophole on or damage to the connecting portion 32 will not cause sealing failure of the battery box 1. In addition, in this embodiment, the diameter of the third through hole 41 is set to be slightly greater than the diameter of the connecting portion 32, facilitating assembly and positioning of the pressing strip 4 in the early stage. Moreover, there is no more constraint on the shape of the third through hole 41 herein, and the third through hole 41 may be but is not limited to a circular shape, a rectangle shape, or a triangle shape, as along as the connecting portion 32 can be sleeved.

According to some embodiments of this application, optionally, referring to FIG. 7, the upper cover body 3 and the connecting portion 32 are integrally formed.

When the entire upper cover 2 is made of plastics, the integral forming of the upper cover body 3 and the connecting portion 32 may be but is not limited to integral vacuum forming which features convenient processing, high efficiency, short molding period, and low mold costs. In addition, referring to FIG. 7, the vacuum molding enables the interior of the connecting portion 32 to be hollow, guaranteeing strength and light mass during molding to the upper cover 2. Certainly, processes such as pressing molding and injection molding can be also applied. In addition, when the upper cover body 3 and the connecting portion 32 are integrally formed through vacuuming, a draft angle of the connecting portion 32 is set to be three degrees in this embodiment, facilitating demolding of the upper cover body 3 after formation. To be specific, reference can be made to to an included angle between an inner wall of the hollow interior of the connecting portion 32 and a vertical direction in FIG. 7. Such arrangement is understandable by persons in the art and there is no more constraint herein.

The upper cover body 3 and the connecting portion 32 are prepared through the integral forming process, which features convenient processing, high efficiency, and low costs of the components, greatly improving the overall assembly efficiency.

According to some embodiments of this application, optionally, the pressing strip 4 is in attachment connection with the first surface of the flange 31 through friction welding.

The friction welding refers to a method in which heat energy generated through friction between contact surfaces of workpieces is used as a heat source to allow for plastic deformation of the workpieces under a pressure for welding.

In this embodiment, when the pressing strip 4 and the flange 31 are both plastic pieces, they can be in direct attachment connection with each other through friction welding without the need for any connection structure, simplifying the connection process and improving the connection efficiency. Certainly, it can be understood that in this embodiment, in addition to the attachment connection between the pressing strip 4 and the flange 31, connection through friction welding may be also achieved at a position without the connecting portion 32 on the premise of presence of the connecting portion 32, thus improving the connection strength between the pressing strip 4 and the flange 31.

According to some embodiments of this application, optionally, referring to FIG. 7, the pressing strip 4 is provided with a reinforcing portion 42. The reinforcing portion 42 is disposed at any edge extending along a length direction of the pressing strip 4, the reinforcing portion 42 extends along a thickness direction of the pressing strip 4, and the reinforcing portion 42 is in transition connection with the edge of the pressing strip 4 via a rounded corner.

The reinforcing portion 42 and the pressing strip 4 are integrally formed using a same material, and the reinforcing portion 42 extends along the thickness direction of the pressing strip 4 to enhance the strength of the pressing strip 4, preventing deformation of the pressing strip 4 in its thickness direction which otherwise causes failure in fixing the flange 31. The reinforcing portion 42 may be continuously provided along the length direction of the pressing strip 4 or arranged as one or more segments spaced apart along the length direction of the pressing strip 4, for example, 15 mm.

In this embodiment, referring to FIG. 6, the upper cover body 3 is a hollow structure with one side open, such that the flange 31 needs to be in transition connection, via a rounded corner, with the side wall 35 of the upper cover body 3 extending in the vertical direction. In this embodiment, optionally, the reinforcing portion 42 is enabled to extend along a direction facing away from the flange 31, such that a transition rounded corner between the reinforcing portion 42 and the pressing strip 4 corresponds to a transition rounded corner between the flange 31 and the side wall 35, thus allowing for not only effective transition and force transfer but also fitting with a transition position between the flange 31 on the upper cover body 3 and the side wall 35, preventing abrasion on the flange 31 or the upper cover body 3 caused by direct abutting of the straight edge of the pressing strip 4 against the position.

According to some embodiments of this application, this application further provides a battery 100 including the foregoing battery box 1.

According to some embodiments of this application, this application provides an electric device including the foregoing battery 100.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims. This application is not limited to the specific embodiments disclosed in this specification but includes all technical solutions falling in the scope of the claims.

## Claims

1. A battery box (1), comprising an upper cover (2), wherein
the upper cover (2) comprises an upper cover body (3) and a pressing strip (4), wherein
a circumferential edge of the upper cover body (3) is provided with a flange (31), the flange (31) has a first surface, and the first surface is a surface of the flange (31) facing away from a lower box body (5) of the battery box (1); and
the pressing strip (4) is in attachment connection with the first surface of the flange (31); wherein
the first surface of the flange (31) is provided with several connecting portions (32) spaced apart from each other, the connecting portion (32) runs through the pressing strip (4) along a direction leaving the first surface, and the connecting portion (32) is capable of covering at least part of a surface of the pressing strip (4) facing away from the first surface, and connecting the pressing strip (4) and the flange (31);
the flange (31) is provided with several first through holes (33) spaced apart from each other, and the first through hole (33) runs through the flange (31) along a thickness direction of the flange (31); and
the pressing strip (4) is provided with several second through holes (34) spaced apart from each other, and the second through hole (34) and the first through hole (33) are arranged coaxially and used for fitting with a bolt for connection with the lower box body (5);
the pressing strip (4) is provided with several third through holes (41) corresponding to the several connecting portions (32), and the third through hole (41) is used for sleeving the connecting portion (32); **characterized in that**
a distance between the third through hole (41) and an outer edge of the flange (31) is less than a distance between the second through hole (34) and the outer edge of the flange (31).

2. The battery box (1) according to claim 1, wherein
the connecting portion (32) is a hot melt post.

3. The battery box (1) according to claim 1 or 2, wherein
an end of the connecting portion (32) away from the flange (31) exceeds the surface of the pressing strip (4) facing away from the first surface.

4. The battery box (1) according to any one of claims 1 to 3, wherein
the upper cover body (3) and the connecting portion (32) are integrally formed.

5. The battery box (1) according to any one of claims 1 to 4, wherein
the pressing strip (4) is in attachment connection with the first surface of the flange (31) through friction welding.

6. The battery box (1) according to any one of claims 1 to 5, wherein
the pressing strip (4) is provided with a reinforcing portion (42), wherein
the reinforcing portion (42) is disposed at any edge extending along a length direction of the pressing strip (4), the reinforcing portion (42) extends along a thickness direction of the pressing strip (4), and the reinforcing portion (42) is in transition connection with the edge of the pressing strip (4) via a rounded corner.

7. A battery (100), comprising:
the battery box (1) according to any one of claims 1 to 6.

8. An electric device, comprising:
the battery (100) according to claim 7.

## Patentansprüche

1. Batteriegehäuse (1), umfassend einen oberen Deckel (2), wobei
der obere Deckel (2) einen oberen Deckelkörper (3) und eine Pressleiste (4) umfasst, wobei ein umlaufender Rand des oberen Deckelkörpers (3) mit einem Flansch (31) versehen ist, der Flansch (31) eine erste Oberfläche aufweist, und die erste Oberfläche eine dem unteren Gehäusekörper (5) des Batteriegehäuses (1) abgewandte Oberfläche des Flansches (31) ist; und
die Pressleiste (4) in Anbindungsverbindung mit der ersten Oberfläche des Flansches (31) steht; wobei
die erste Oberfläche des Flansches (31) mit mehreren voneinander beabstandeten Verbindungsabschnitten (32) versehen ist, der Verbindungsabschnitt (32) die Pressleiste (4) entlang einer von der ersten Oberfläche wegführenden Richtung durchläuft und der Verbindungsabschnitt (32) dazu geeignet ist, zumindest einen Teil einer der ersten Oberfläche abgewandten Oberfläche der Pressleiste (4) zu bedecken und die Pressleiste (4) und den Flansch (31) zu verbinden;
der Flansch (31) mit mehreren voneinander beabstandeten ersten Durchgangslöchern (33) versehen ist, und das erste Durchgangsloch (33) den Flansch (31) entlang einer Dickenrichtung des Flansches (31) durchläuft; und
die Pressleiste (4) mit mehreren voneinander beabstandeten zweiten Durchgangslöchern (34) versehen ist, und das zweite Durchgangsloch (34) und das erste Durchgangsloch (33) koaxial angeordnet sind und zum Zusammenwirken mit einem Bolzen zur Verbindung mit dem unteren Gehäusekörper (5) verwendet werden;
die Pressleiste (4) mit mehreren dritten Durchgangslöchern (41) versehen ist, die den mehreren Verbindungsabschnitten (32) entsprechen, und das dritte Durchgangsloch (41) zum Aufstecken des Verbindungsabschnitts (32) verwendet wird; **dadurch gekennzeichnet, dass**
ein Abstand zwischen dem dritten Durchgangsloch (41) und einer Außenkante des Flansches (31) kleiner ist als ein Abstand zwischen dem zweiten Durchgangsloch (34) und der Außenkante des Flansches (31).

2. Batteriegehäuse (1) nach Anspruch 1, wobei
der Verbindungsabschnitt (32) ein Schmelzstift ist.

3. Batteriegehäuse (1) nach Anspruch 1 oder 2, wobei
ein Ende des Verbindungsabschnitts (32), das vom Flansch (31) abgewandt ist, die der ersten Oberfläche abgewandte Oberfläche der Pressleiste (4) überragt.

4. Batteriegehäuse (1) nach einem der Ansprüche 1 bis 3, wobei
der obere Deckelkörper (3) und der Verbindungsabschnitt (32) einstückig ausgebildet sind.

5. Batteriegehäuse (1) nach einem der Ansprüche 1 bis 4, wobei
die Pressleiste (4) durch Reibschweißen in Anbindungsverbindung mit der ersten Oberfläche des Flansches (31) steht.

6. Batteriegehäuse (1) nach einem der Ansprüche 1 bis 5, wobei
die Pressleiste (4) mit einem Verstärkungsabschnitt (42) versehen ist, wobei
der Verstärkungsabschnitt (42) an jeder Kante angeordnet ist, die sich entlang einer Längsrichtung der Pressleiste (4) erstreckt, der Verstärkungsabschnitt (42) sich entlang einer Dickenrichtung der Pressleiste (4) erstreckt, und der Verstärkungsabschnitt (42) über eine abgerundete Ecke in Übergangsverbindung mit der Kante der Pressleiste (4) steht.

7. Batterie (100), umfassend:
das Batteriegehäuse (1) nach einem der Ansprüche 1 bis 6.

8. Elektrisches Gerät, umfassend:
die Batterie (100) nach Anspruch 7.

## Revendications

1. Boîte de batterie (1), comprenant un couvercle supérieur (2), dans laquelle
le couvercle supérieur (2) comprend un corps de couvercle supérieur (3) et une bande de pression (4), dans laquelle
un bord périphérique du corps de couvercle supérieur (3) est pourvu d'une bride (31), la bride (31) ayant une première surface, et la première surface étant une surface de la bride (31) orientée à l'opposé d'un corps de boîte inférieur (5) de la boîte de batterie (1); et
la bande de pression (4) est en liaison de fixation avec la première surface de la bride (31) ; dans laquelle
la première surface de la bride (31) est pourvue de plusieurs portions de connexion (32) espacées les unes des autres, la portion de connexion (32) traverse la bande de pression (4) selon une direction s'éloignant de la première surface, et la portion de connexion (32) est apte à recouvrir au moins une partie d'une surface de la bande de pression (4) orientée à l'opposé de la première surface, et à relier la bande de pression (4) et la bride (31);
la bride (31) est pourvue de plusieurs premiers trous traversants (33) espacés les uns des autres, et le premier trou traversant (33) traverse la bride (31) selon une direction d'épaisseur de la bride (31); et
la bande de pression (4) est pourvue de plusieurs seconds trous traversants (34) espacés les uns des autres, et le second trou traversant (34) et le premier trou traversant (33) sont disposés coaxialement et utilisés pour coopérer avec un boulon pour la connexion avec le corps de boîte inférieur (5);
la bande de pression (4) est pourvue de plusieurs troisièmes trous traversants (41) correspondant aux plusieurs portions de connexion (32), et le troisième trou traversant (41) est utilisé pour enfiler la portion de connexion (32); **caractérisée en ce que**
une distance entre le troisième trou traversant (41) et un bord extérieur de la bride (31) est inférieure à une distance entre le second trou traversant (34) et le bord extérieur de la bride (31).

2. Boîte de batterie (1) selon la revendication 1, dans laquelle
la portion de connexion (32) est un plot de fusion à chaud.

3. Boîte de batterie (1) selon la revendication 1 ou 2, dans laquelle
une extrémité de la portion de connexion (32) éloignée de la bride (31) dépasse la surface de la bande de pression (4) orientée à l'opposé de la première surface.

4. Boîte de batterie (1) selon l'une quelconque des revendications 1 à 3, dans laquelle
le corps de couvercle supérieur (3) et la portion de connexion (32) sont formés d'une seule pièce.

5. Boîte de batterie (1) selon l'une quelconque des revendications 1 à 4, dans laquelle
la bande de pression (4) est en liaison de fixation avec la première surface de la bride (31) par soudage par friction.

6. Boîte de batterie (1) selon l'une quelconque des revendications 1 à 5, dans laquelle
la bande de pression (4) est pourvue d'une portion de renforcement (42), dans laquelle
la portion de renforcement (42) est disposée sur un bord quelconque s'étendant selon une direction de longueur de la bande de pression (4), la portion de renforcement (42) s'étend selon une direction d'épaisseur de la bande de pression (4), et la portion de renforcement (42) est en liaison de transition avec le bord de la bande de pression (4) via un coin arrondi.

7. Batterie (100), comprenant:
la boîte de batterie (1) selon l'une quelconque des revendications 1 à 6.

8. Dispositif électrique, comprenant:
la batterie (100) selon la revendication 7.
